# EUROPEAN PATENT APPLICATION

(11) **EP 4 752 788 A1**
(43) Date of publication of application: **03.06.2026**
(21) Application number: 25202303.1
(22) Date of filing: 15.09.2025
(51) Int. Cl.: G06N 3/0455, G06N 20/00, G06V 10/80

(54) **MIXED-MODALITY SUMMARIZATION WITH CORESETS AND CONSTRAINTS**

(30) Priority: 27.11.2024 US 202418963412
(71) Applicant: Microsoft Technology Licensing, LLC, Redmond, WA 98052 (US)
(72) Inventor: DIESENDRUCK, Maurice, Redmond, 98052 (US); SHRIVASTAVA, Harsh, Redmond, 98052 (US); SHARMA, Pramod K., Redmond, 98052 (US); IMANI, Shima, Redmond, 98052 (US); MITAL, Vijay, Redmond, 98052 (US)
(74) Representative: CMS Cameron McKenna Nabarro Olswang LLP

(57) **Abstract**

Methods and apparatuses for generating mixed-modality summaries of mixed-modality data subject to constraints that vary over time, end users, output device types, and operating environments are described. A mixed-modality summary generation system generates mixed-modality embeddings within a joint embedding space using the mixed-modality data, determines user-derived constraints and output device constraints, determines a coreset of the mixed-modality embeddings within the joint embedding space based on the user-derived constraints and output device constraints, generates a mixed-modality summary using the coreset, and outputs the mixed-modality summary using an output device. Based on the user-derived constraints and the output device constraints, the mixed-modality summary generation system may identify joint-modality or single-modality embeddings, wherein each embedding comprises a joint-modality or single-modality embedding within a threshold distance to one of the embeddings within the coreset of the mixed-modality embeddings.

## Description

### BACKGROUND

Recent years have seen rapid growth in the capability and sophistication of artificial intelligence (Al) and machine learning (ML) software applications. For instance, deep neural networks have seen widespread adoption due to their diverse processing capabilities in vision, speech, language, and decision making. Commensurate with their capabilities, deep neural networks are complex, oftentimes comprising millions if not billions of individual parameters. Accordingly, many organizations have deployed large-scale computing infrastructure, such as cloud computing, to offer Al platforms tailored to enabling users to make use of cutting-edge neural networks.

### BRIEF SUMMARY

Systems and methods are provided for generating and outputting mixed-modality summaries of mixed-modality data subject to constraints that vary over time, end users, output device types, and operating environments. In some embodiments, a mixed-modality summary generation system generates mixed-modality embeddings within a joint embedding space using the mixed-modality data, determines user-derived constraints and output device constraints, determines a coreset of the mixed-modality embeddings within the joint embedding space based on the user-derived constraints and output device constraints, generates a mixed-modality summary using the coreset, and outputs the mixed-modality summary using an output device. The coreset of the mixed-modality embeddings may comprise a representative subset of the mixed-modality embeddings. In some cases, the coreset retains the most important features from the modalities of the mixed-modality data while significantly reducing the size of the original dataset.

In some embodiments, based on user-derived constraints and output device constraints, a mixed-modality summary generation system may identify a second coreset of joint-modality or single-modality embeddings from the coreset of the mixed-modality embeddings, wherein each embedding within the second coreset comprises a joint-modality or single-modality embedding within a threshold distance to one of the embeddings within the coreset of the mixed-modality embeddings. The threshold distance may correspond with a threshold cosine distance or Euclidean distance between two embedding vectors. The mixed-modality summary generation system may output a summary based on the second coreset using the output device. In one example, the mixed-modality summary generation system outputs the summary by transferring, playing, or displaying a summary video with audio that summarizes mixed-modality data associated with five different modalities using a smartphone.

According to some embodiments, the technical benefits of the systems and methods disclosed herein include improved visualization and communication of mixed-modality data, reduced cost of computing and storage resources for processing and visualizing large or dense multimodal inputs, and reduced power consumption of computing and storage resources when generating mixed-modality summaries of mixed-modality data. Other technical benefits can also be realized through various implementations of the disclosed technologies.

This Summary is provided to introduce a brief description of some aspects of the disclosed technologies in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Like-numbered elements may refer to common components in the different figures.
Figure 1A depicts one embodiment of a mixed-modality summary generation system.
Figure 1B depicts one embodiment of a mixed-modality summary generation system that includes a coreset remapping engine that generates updated coreset embeddings.
Figure 1C depicts one embodiment of two embedding vectors and a distance between the two embedding vectors.
Figure 1D depicts one embodiment of a mixed-modality embedding associated with four modalities.
Figure 2A depicts one embodiment of a networked computing environment.
Figure 2B depicts one embodiment of various components of the computing system in Figure 2A.
Figure 3A depicts a flowchart describing one embodiment of a process for generating a mixed-modality summary.
Figure 3B depicts a flowchart describing another embodiment of a process for generating a mixed-modality summary.

### DETAILED DESCRIPTION

The technologies described herein dynamically generate and output mixed-modality summaries of mixed-modality data (e.g., comprising text, image, audio, and video data) subject to constraints that vary over time, end users, output device types, and operating environments. In some cases, a mixed-modality summary of mixed-modality data is generated using a mixed-modality summary generation system. The mixed-modality summary generation system generates mixed-modality embeddings using mixed-modality data, acquires constraints for a coreset (or support set), and determines the coreset using the mixed-modality embeddings and the constraints. The coreset may comprise a subset of the mixed-modality embeddings that best represent the mixed-modality embeddings within a joint embedding space of the mixed-modality embeddings and that satisfies the constraints for the coreset. In one example, the coreset comprises a representative subset of the mixed-modality embeddings that best represents the mixed-modality embeddings generated using the mixed-modality data that includes two or more different modalities (e.g., video and audio data) and that satisfies the constraints.

In some cases, the constraints are determined based on an amount of noise within an operating environment of an output device for outputting a mixed-modality summary, a display size for the output device, and/or a device type of the output device. The mixed-modality summary generation system may generate the mixed-modality summary using the coreset and then output the mixed-modality summary using the output device (e.g., playing a video with overlayed text corresponding with audio data using a handheld computing device).

In some embodiments, the mixed-modality summary generation system determines user-related and output device constraints and generates a coreset associated with a mixed-modality summary based on the user-related and output device constraints. In one example, the output device constraints correspond to a threshold amount of noise within an operating environment of an output device and the type of output device that is used for outputting the mixed-modality summary. In this case, the amount of noise within an operating environment and the type of output device, such as whether the output device comprises a watch, headphones, a head-mounted display device, smartphone, or laptop computer, determines the types of modalities used for the mixed-modality summary.

In one example, if the amount of noise is less than a threshold level of noise (e.g., is less than 75dB), then the mixed-modality summary includes an audio component; however, if the amount of noise is greater than the threshold level of noise, then the mixed-modality summary does not include an audio component. If the output device comprises a watch, a device with a handheld form factor, or an output device that has a display size that is less than a threshold display size (e.g., is less than 400 square millimeters), then the mixed-modality summary does not include a video component or an image component; however, if the output device has a display size that is greater than the threshold display size, then the mixed-modality summary includes a video component or an image component.

In some cases, an end user of the mixed-modality summary generation system specifies the types of mixed-modality data to be summarized and how each type of data is partitioned (or chunked). Each modality or type of data may be partitioned into a minimal unit that is informative for that modality or type of data. In one example, for video content, the minimal unit that is informative comprises at least 3 seconds of video; for audio content, the minimal unit that is informative comprises at least 2 seconds of audio; for textual content, the minimal unit that is informative comprises at least a sentence of text. In one example, the mixed-modality data comprises audio data that is partitioned into five second snippets, single image data for 50 images, text data that is partitioned into sentences, and video data that is partitioned into ten second snippets.

The mixed-modality summary generation system generates mixed-modality embeddings within a joint embedding space using the mixed-modality data, determines user-derived constraints and output device constraints, determines a coreset of the mixed-modality embeddings within the joint embedding space based on the user-derived constraints and output device constraints, generates a mixed-modality summary using the coreset, and outputs the mixed-modality summary using an output device. Unless otherwise specified by the end user, the output device used by the end user is identified as the output device for the mixed-modality summary.

In some embodiments, the mixed-modality summary generation system captures or acquires mixed-modality data including text, audio, video, images, and sensor data. The mixed-modality summary generation system then determines output device constraints and user-derived constraints, such as restricting the mixed-modality summary to two specific modalities, generating a specific number of points in the summarizing coreset, generating a mixed-modality summary with less than a specific total data size (e.g., less than 1GB), or generating the mixed-modality summary such that a video component and/or an audio component of the mixed-modality summary has less than a fixed total length of time. In some cases, a data size corresponds to a number of bytes (e.g., less than 2MB), a number of words (e.g., less than 200 words), or a number of characters (e.g., less than 100 characters).

In some embodiments, the mixed-modality summary generation system determines the coreset of the mixed-modality embeddings within the joint embedding space by utilizing both single-modality embeddings and joint-modality embeddings within the joint embedding space. The joint-modality embeddings correspond to embeddings for two or more modalities. In some examples, the number of modalities used for the joint-modality embeddings is less than the number of modalities used in the mixed-modality data. In one example, the number of modalities used in the mixed-modality data comprises seven different modalities and the number of modalities used for the joint-modality embeddings comprises three different modalities. A single-modality embedding corresponds to only one modality (e.g., just audio data).

In some cases, based on user-derived constraints and output device constraints, the mixed-modality summary generation system determines a first coreset of mixed-modality embeddings and then identify a second coreset of joint-modality or single-modality embeddings, in which each embedding within the second coreset comprises a nearest neighbor joint-modality or single-modality embedding to one of the embeddings within the first coreset. If a joint-modality or single-modality embedding is not within a threshold distance of a mixed-modality embedding within the first coreset, then the mixed-modality embedding is subsequently processed to change a first modality (e.g., audio) into a second modality (e.g., text) to satisfy the user-derived constraints and the output device constraints.

A technical benefit of generating a mixed-modality summary that satisfies user-derived constraints and output device constraints is that the mixed-modality summary may capture the full context and richness of the mixed-modality data while also generating a representative summary of the mixed-modality data that is best suited for a particular output device and for a particular end user of the output device, thereby providing a better understanding, visualization, and communication of the mixed-modality data. Technical benefits of generating the mixed-modality summary that satisfies the user-derived constraints and the output device constraints include reduced cost of computing and storage resources for processing large or dense multimodal inputs, such as those found in manufacturing and sensing applications. Furthermore, technical benefits of intelligently generating the mixed-modality summary by identifying nearest neighbor embeddings or embeddings within a threshold distance of the embeddings within the coreset of the mixed-modality embeddings based on the user-derived constraints and the output device constraints include reduced power consumption of computing and storage resources.

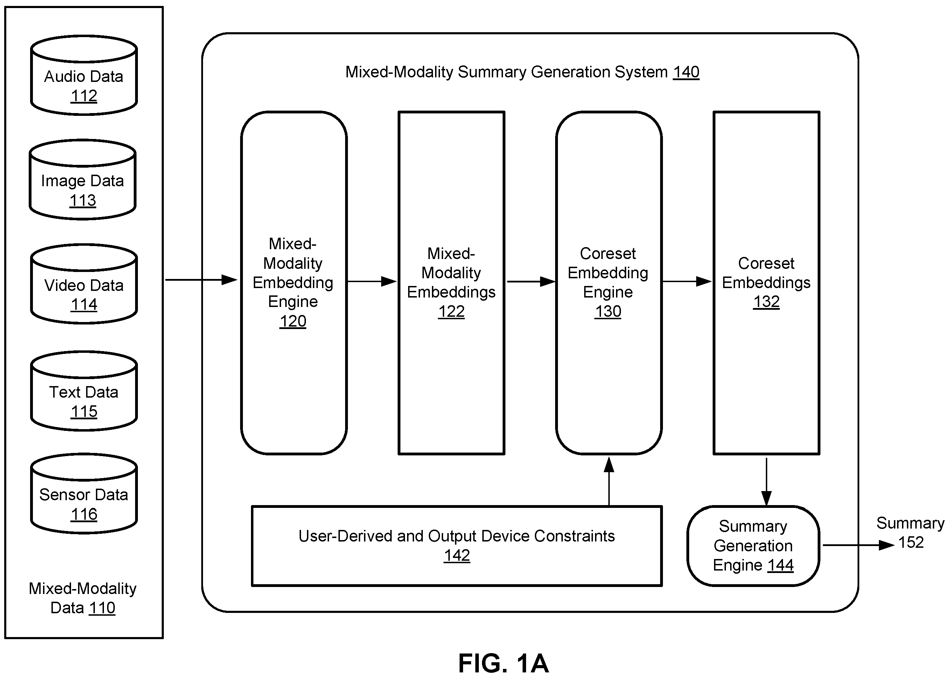

Figure 1A depicts one embodiment of a mixed-modality summary generation system 140. The mixed-modality summary generation system 140 acquires mixed-modality data 110 that includes audio data 112, image data 113, video data 114, text data 115, and/or sensor data 116. Others types of modalities not depicted may also be acquired by the mixed-modality summary generation system 140. In one example, the image data 113 comprises color images, depth images, and/or thermal images.

As depicted in Figure 1A, the mixed-modality summary generation system 140 includes mixed-modality embedding engine 120 that uses the mixed-modality data 110 to generate mixed-modality embeddings 122. The mixed-modality embeddings 122 may be stored using a data storage device or memory. The mixed-modality embeddings 122 may comprise mixed-modality embeddings within a joint embedding space. The coreset embedding engine 130 uses the mixed-modality embeddings 122 and the user-derived and output device constraints 142 to generate coreset embeddings 132. The summary generation engine 144 uses the coreset embeddings 132 to generate the summary 152. In one example, the summary 152 is used by an output device to play or display the summary 152.

By computing a coreset comprising the coreset embeddings 132, the mixed-modality summary generation system 140 reduces the amount of data that needs to be processed, thereby saving time and computational resources. The mixed-modality summary generation system 140 is configurable to handle multiple modalities and userdefined constraints, thereby making the system adaptable to a range of scenarios. The adaptable system has the ability to accommodate various needs, e.g. the user might want a summary that focuses on a specific modality, or a summary that fits within a certain data size or time limit. By using a joint embedding space, the mixed-modality summary generation system 140 is able to capture the full context and richness of the mixed-modality data, leading to a more representative summary. This approach also allows the summary to include whichever modality is best-suited for representing each semantic idea. The mixed-modality summary generation system 140 is configurable to simplify the task of summarizing mixed-modality data, by unifying different modality datasets, rather than treating them separately.

In one example, the mixed-modality summary generation system 140 acquires mixed-modality data, including text reports, audio interviews, video footage, satellite images, and sensor data from weather stations, and generates a summary of the acquired mixed-modality data that is restricted to only text and images, contains no more than 20 items, and does not exceed 100MB in size. In another example, the mixed-modality summary generation system 140 acquires or collects customer feedback in various forms, such as text reviews, audio recordings of phone calls, video testimonials, and social media posts, and generates a mixed-modality summary that comprises only text and images, contain no more than 50 items, and is readable within 10 minutes.

In some cases, the mixed-modality summary generation system 140 utilizes a joint embedding space model to embed data from all modalities into a shared embedding space. This embedding space captures the semantic relationships between data points of different modalities, allowing the system to understand the data in a unified way.

Embeddings (or vector embeddings) may comprise numerical representations of content, semantic meaning, and/or relationships between data points in a high-dimensional vector space. Each dimension of a vector embedding may correspond to a different feature or attribute of the content of the mixed-modality data. Multi-modal embeddings encode and relate multiple different data modalities into a shared or joint embedding space. In some cases, a joint embedding space for all modalities of the mixed-modality data may be learned using images to bind them together. In this case, embeddings for each modality may be aligned to image embeddings.

In some embodiments, contrastive learning may be utilized to align pairs of modalities. Contrastive learning refers to a technique for learning an embedding space by using pairs of related examples (positives) and unrelated examples (negatives). Using pairs of aligned observations, contrastive learning can align pairs of modalities such as (image, text), (audio, text), (image, depth), and (video, audio).

In some cases, the mixed-modality summary generation system 140 utilizes both single-modality embedding and joint embedding. The combination of single-modality embedding and joint embedding allows the system to identify support sets (or coresets) for each modality separately, as well as the support set for the joint embedding. These support sets may differ from one another, because each modality carries different semantic information.

Based on user-related and output device constraints, the mixed-modality summary generation system 140 may transform single-modality coreset embeddings into the desired modality by finding nearest-neighbors in the target space. In one example, the mixed-modality summary generation system 140 converts a text summary into a video form or converts the text summary into an audio form that speaks the contents of the text summary.

In some embodiments, the transformed single-modality embeddings can be combined with the joint embedding support set to create a more comprehensive and accurate representation of the data. This approach allows the mixed-modality summary generation system 140 to leverage the strengths of both single-modality and joint embedding techniques.

In some cases, the mixed-modality summary generation system 140 computes a coreset from mixed-modality embeddings within the joint embedding space that satisfies the user-related and output device constraints. In one example, the coreset embeddings correspond with key text reports, important images, and transcriptions of crucial points from audio and video data within the mixed-modality data.

In one embodiment, the mixed-modality summary generation system 140 uses a constrained optimization algorithm to ensure that the coreset is as representative as possible, while still satisfying the user-related and output device constraints. After the coreset has been generated, the mixed-modality summary generation system 140 may output the coreset as a summary of the mixed-modality data. In one example, the summary involves a timeline with time-aligned text and video snippets or a visualization that is tailored to the returned mixed-modality assets.

There are several algorithms and techniques for generating coresets, such as lightweight coreset techniques, adaptive sampling coreset construction, and farthestfirst-traversal-based coreset construction. A coreset algorithm may identify a weighted subset of training data that closely approximates the full dataset.

In some cases, the mixed-modality summary generation system 140 identifies a nearest neighbor embedding within the joint embedding space that only uses modalities that are required for the mixed-modality summary if the distance between the nearest neighbor embedding and the embedding being replaced that has modalities that are not allowed in the mixed-modality summary is less than a threshold distance (e.g., less than a threshold cosine distance or Euclidean distance); otherwise, if the distance is greater than the threshold distance, then the embedding within the coreset that has modalities that are not allowed in the mixed-modality summary may be processed to convert each modality that is not allowed in the mixed-modality summary with a modality that is allowed in the mixed-modality summary.

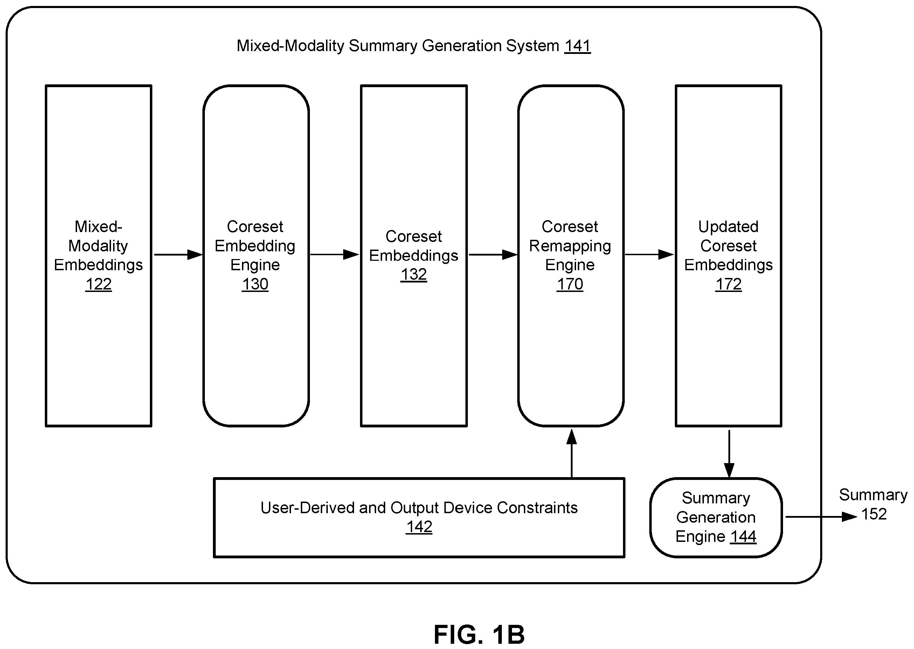

Figure 1B depicts one embodiment of a mixed-modality summary generation system 141 that includes coreset remapping engine 170 that generates updated coreset embeddings 172. The mixed-modality summary generation system 141 acquires mixed-modality embeddings 122, that may comprise mixed-modality embeddings within a joint embedding space. The coreset embedding engine 130 uses the mixed-modality embeddings 122 to generate coreset embeddings 132. The coreset remapping engine 170 generates the updated coreset embeddings 172 using the coreset embeddings 132 and the user-derived and output device constraints 142.

In some cases, the coreset remapping engine 170 may identify embeddings within the coreset embeddings 132 that map to modalities that cannot be part of the generated summary based on the user-derived and output device constraints 142. The coreset remapping engine 170 may remap a first embedding within the coreset embeddings 132 that is associated with video content to a second embedding that is not associated with video content if the distance between the first embedding and the second embedding is less than a threshold distance. The threshold distance may comprise a cosine distance, a Euclidean distance, or another distance metric. The updated coreset embeddings 172 may comprise embeddings for modalities that satisfy the user-derived and output device constraints 142. The summary generation engine 144 uses the updated coreset embeddings 172 to generate the summary 152. In one example, the summary 152 is used by an output device to play or display the summary 152.

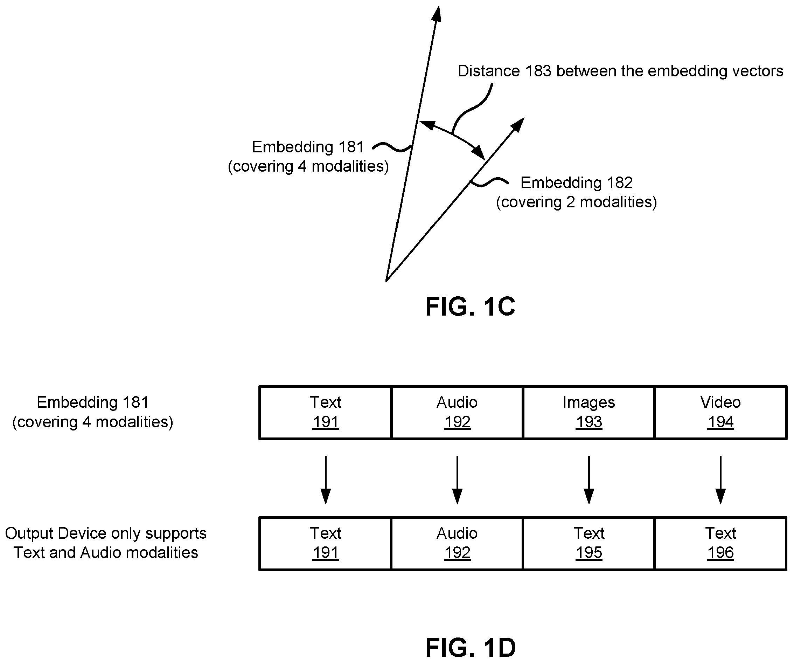

Figure 1C depicts one embodiment of embedding 181 that covers four modalities (e.g., audio, textual, image, and video content), an embedding 182 that covers two modalities (e.g., audio and textual content), and a distance 183 between the embeddings (or embedding vectors) 181 and 182. The distance 183 may comprise a cosine distance.

Figure 1D depicts one embodiment of mixed-modality embedding 181 having four modalities corresponding to text data 191, audio data 192, image data 193, and video data 194. In the case that the user-derived and output device constraints 142 do not permit image data and video data to be part of the outputted summary (e.g., the output device only supports text and audio content, and does not support image or video content), the mixed-modality summary generation system 141 may transform the image data 193 into text data 195 and the video data 194 into text data 196 prior to generating and outputting the summary.

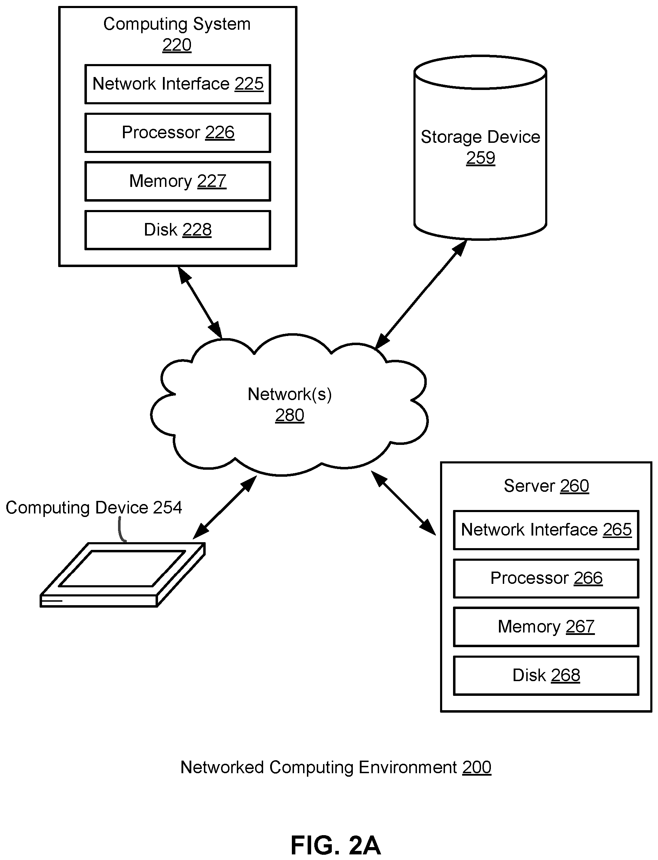

Figure 2A depicts one embodiment of a networked computing environment 200 in which the disclosed technology may be practiced. The networked computing environment 200 includes a computing system 220, storage device 259, server 260, and a computing device 254 in communication with each other via one or more networks 280. The networked computing environment 200 may include various computing and storage devices interconnected through one or more networks 280. The networked computing environment 200 may correspond with or provide access to a cloud computing environment providing Software-as-a-Service (SaaS) or Infrastructure-as-a-Service (laaS) services. The one or more networks 280 may allow computing devices and/or storage devices to connect to and communicate with other computing devices and/or other storage devices. In some cases, the networked computing environment 200 may include other computing devices and/or other storage devices not shown. The other computing devices may include, for example, a mobile computing device, a non-mobile computing device, a server, a workstation, a laptop computer, a tablet computer, a desktop computer, or an information processing system. The other storage devices may include, for example, a storage area network storage device, a networked-attached storage device, a hard disk drive, a solid-state drive, a data storage system, or a cloud-based data storage system. The one or more networks 280 may include a cellular network, a mobile network, a wireless network, a wired network, a secure network such as an enterprise private network, an unsecure network such as a wireless open network, a local area network (LAN), a wide area network (WAN), the Internet, or a combination of networks.

In some embodiments, the computing devices within the networked computing environment 200 comprises real hardware computing devices or virtual computing devices, such as one or more virtual machines. The storage devices within the networked computing environment 200 may comprise real hardware storage devices or virtual storage devices, such as one or more virtual disks. The real hardware storage devices may include non-volatile and volatile storage devices.

The computing system 220 may comprise a distributed computing system or a system for providing a cloud-based computing environment. As depicted in Figure 2A, the computing system 220 includes a network interface 225, processor 226, memory 227, and disk 228 all in communication with each other. The network interface 225, processor 226, memory 227, and disk 228 may comprise real components or virtualized components. In some cases, the network interface 225, processor 226, memory 227, and disk 228 may be provided by a virtualized infrastructure or a cloud-based infrastructure. Network interface 225 allows the computing system 220 to connect to one or more networks 280. Network interface 225 may include a wireless network interface and/or a wired network interface. Processor 226 allows the computing system 220 to execute computer readable instructions stored in memory 227 in order to perform processes described herein. Processor 226 may include one or more processing units, such as one or more CPUs, one or more GPUs, and/or one or more NPUs. Memory 227 may comprise one or more types of memory (e.g., RAM, SRAM, DRAM, EEPROM, Flash). Disk 228 may include a hard disk drive and/or a solid-state drive. Memory 227 and disk 228 may comprise hardware storage devices.

The computing device 254 may comprise a mobile computing device, such as a tablet computer, that allows a user to access a graphical user interface for the computing system 220. A user interface may be provided by the computing system 220 and displayed using a display screen of the computing device 254.

A server, such as server 260, may allow a client device, such as the computing system 220 or computing device 254, to download information or files (e.g., executable, text, application, audio, image, or video files) from the server. The server 260 may comprise a hardware server. In some cases, the server may act as an application server or a file server. In general, a server may refer to a hardware device that acts as the host in a client-server relationship or to a software process that shares a resource with or performs work for one or more clients. The server 260 may store or provide access to a database.

The server 260 includes a network interface 265, processor 266, memory 267, and disk 268 all in communication with each other. Network interface 265 allows server 260 to connect to one or more networks 280. Network interface 265 may include a wireless network interface and/or a wired network interface. Processor 266 allows server 260 to execute computer readable instructions stored in memory 267 in order to perform processes described herein. Processor 266 may include one or more processing units, such as one or more CPUs, one or more GPUs, and/or one or more NPUs. Memory 267 may comprise one or more types of memory (e.g., RAM, SRAM, DRAM, EEPROM, Flash). Disk 268 may include a hard disk drive and/or a solid-state drive. In some cases, the disk 268 includes a flash-based SSD or a hybrid HDD/SSD drive. Memory 267 and disk 268 may comprise hardware storage devices.

The networked computing environment 200 may provide a cloud computing environment for one or more computing devices. In one embodiment, the networked computing environment 200 may include a virtualized infrastructure that provides software, data processing, and/or data storage services to end users accessing the services via the networked computing environment. In one example, networked computing environment 200 may provide cloud-based applications to computing devices, such as computing device 254, using the computing system 220, storage device 259, and/or server 260.

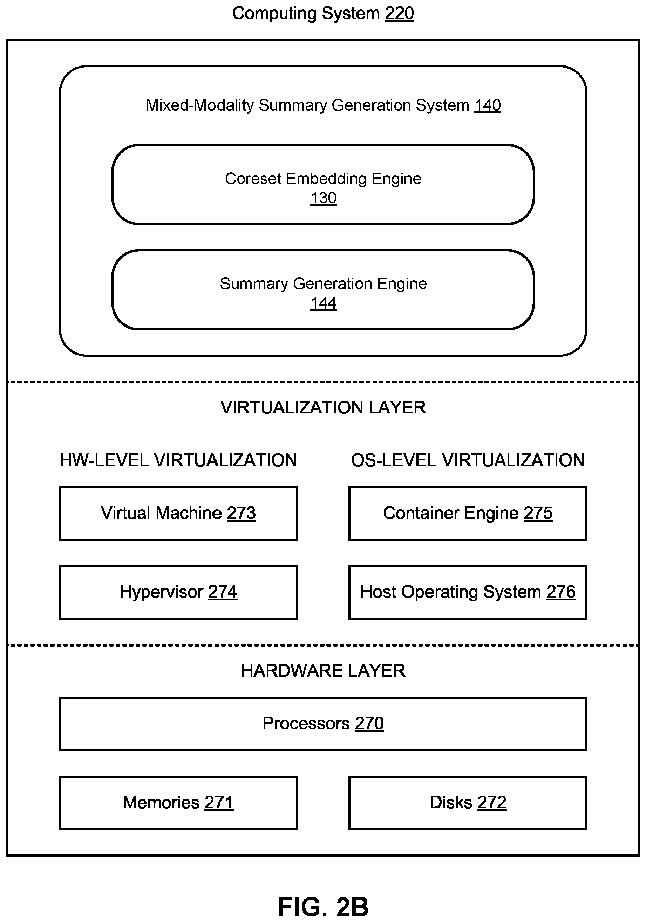

Figure 2B depicts one embodiment of various components of the computing system 220 in Figure 2A. As depicted, the computing system 220 includes hardware-level components and software-level components. The hardware-level components may include one or more processors 270, one or more memories 271, and one or more disks 272. The one or more processors 270 may include one or more processing units, such as one or more CPUs, one or more GPUs, and/or one or more NPUs. The one or more memories 271 may comprise one or more types of memory (e.g., RAM, SRAM, DRAM, EEPROM, Flash). The one or more disks 272 may include a hard disk drive and/or a solid-state drive. Both the one or more memories 271 and the one or more disks 272 may comprise hardware storage devices. The one or more processors 270 may comprise a processing system.

The software-level components may include software applications and computer programs. The mixed-modality summary generation system 140, the coreset embedding engine 130, and/or the summary generation engine 144 may be stored or implemented using software or a combination of hardware and software. In some cases, the software-level components are run using a dedicated hardware server. In other cases, the software-level components may be run using a virtual machine or containerized environment running on a plurality of machines. In various embodiments, the software-level components may be run from the cloud (e.g., the software-level components may be deployed using a cloud-based compute and storage infrastructure).

As depicted in Figure 2B, the software-level components may also include virtualization layer processes, such as virtual machine 273, hypervisor 274, container engine 275, and host operating system 276. The hypervisor 274 may comprise a native hypervisor (or bare-metal hypervisor) or a hosted hypervisor (or type 2 hypervisor). The hypervisor 274 may provide a virtual operating platform for running one or more virtual machines, such as virtual machine 273. A hypervisor may comprise software that creates and runs virtual machine instances. Virtual machine 273 may include a plurality of virtual hardware devices, such as a virtual processor, a virtual memory, and a virtual disk. The virtual machine 273 may include a guest operating system that has the capability to run one or more software applications. The virtual machine 273 may run the host operation system 276 upon which the container engine 275 may run.

The container engine 275 may run on top of the host operating system 276 in order to run multiple isolated instances (or containers) on the same operating system kernel of the host operating system 276. Containers may facilitate virtualization at the operating system level and may provide a virtualized environment for running applications and their dependencies. Containerized applications may comprise applications that run within an isolated runtime environment (or container). The container engine 275 may acquire a container image and convert the container image into running processes. In some cases, the container engine 275 may group containers that make up an application into logical units (or pods). A pod may contain one or more containers and all containers in a pod may run on the same node in a cluster. Each pod may serve as a deployment unit for the cluster. Each pod may run a single instance of an application.

In some embodiments, the depicted components of the computing system 220 including the mixed-modality summary generation system 140, the coreset embedding engine 130, and the summary generation engine 144 are implemented in the cloud or in a virtualized environment that allows virtual hardware to be created and decoupled from the underlying physical hardware.

The mixed-modality summary generation system 140 may utilize one or more machine learning models. The one or more machine learning models may include neural networks (e.g., deep neural networks), support vector machine models, decision tree-based models, k-nearest neighbor models, Bayesian networks, or other types of models such as linear models and/or non-linear models. A linear model may be specified as a linear combination of input features. A neural network may comprise a feed-forward neural network, recurrent neural network, or a convolutional neural network. The one or more machine learning models may include one or more generative Al models. The one or more machine learning models may include one or more multimodal models. The one or more machine learning models may include one or more large language models.

Multimodal learning may refer to a type of machine learning in which a machine learning model is trained to understand multiple forms of input data (e.g., text, images, video, and audio data) that derive from different modalities. A multimodal model may comprise a model whose inputs and/or outputs include more than one modality. For example, a multimodal model may take both an image and a text caption as input features, and output a score indicating how appropriate the text caption is for the image. Image data may include different types of images, such as color images, depth images, and thermal images. In some cases, a machine learning model comprises a multimodal model, a language model, or a visual model.

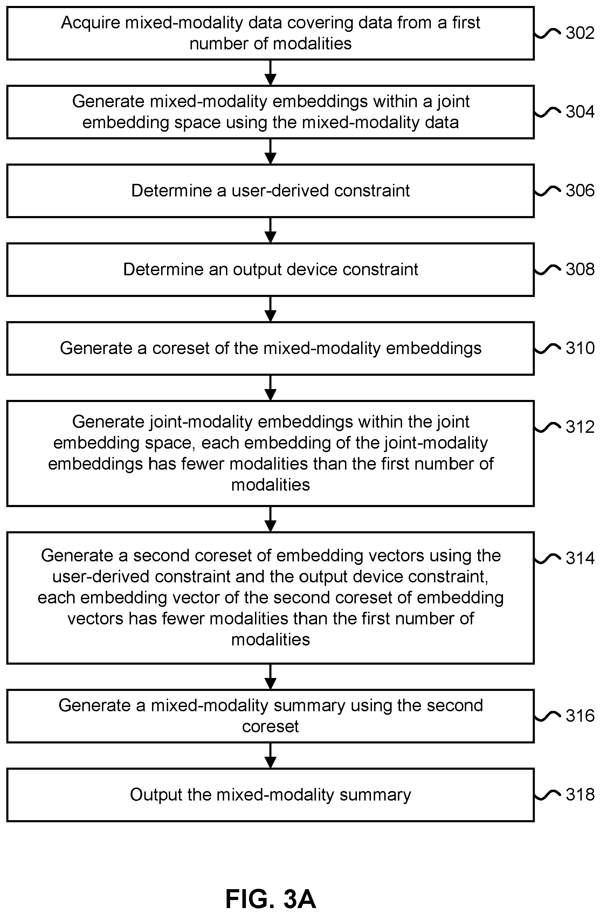

Figure 3A depicts a flowchart describing one embodiment of a process for generating a mixed-modality summary using a mixed-modality summary generation system. In one embodiment, the process of Figure 3A is performed using a computing system, such as the computing system 220 in Figure 2B, using the mixed-modality summary generation system 140 in Figure 1A, or using the mixed-modality summary generation system 141 in Figure 1B. In another embodiment, the process of Figure 3A is implemented using a cloud-based computing platform or cloud-based computing services.

In step 302, mixed-modality data is acquired. In one example, the mixed-modality data corresponds to the mixed-modality data 110 in Figure 1A. The mixed-modality data may cover data from a first number of modalities, such as four different modalities. In step 304, mixed-modality embeddings within a joint embedding space are generated using the mixed-modality data. In one example, the mixed-modality embeddings correspond to the mixed-modality embeddings 122 in Figure 1A. In some cases, the mixed-modality embeddings are generated using an algorithm for generating multimodal embeddings, such as Contrastive Language-Image Pre-Training or Vision- and-Language BERT, or generated using a multimodal generative embedding model.

In step 306, a user-derived constraint is determined. In step 308, an output device constraint is determined. In step 310, a coreset of the mixed-modality embeddings is generated. In step 312, joint-modality embeddings within the joint embedding space are generated. Each embedding of the joint-modality embeddings has fewer modalities than the first number of modalities. In step 314, a second coreset of embedding vectors is generated using the user-derived constraint and the output device constraint. Each embedding vector of the second coreset of embedding vectors has fewer modalities than the first number of modalities.

In step 316, a mixed-modality summary is generated using the second coreset. In one example, the second coreset corresponds to the updated coreset embeddings 172 in Figure 1B. The mixed-modality summary may be generated using a summary generation engine, such as the summary generation engine 144 in Figure 1A. In step 314, the mixed-modality summary is outputted. In one example, the mixed-modality summary is outputted by transferring the mixed-modality summary to a computing device, such as the computing device 254 in Figure 2A, by playing the mixed-modality summary or a portion thereof using the computing device, or by displaying the mixed-modality summary or a portion thereof using the computing device. The computing device may comprise an output device for outputting the mixed-modality summary.

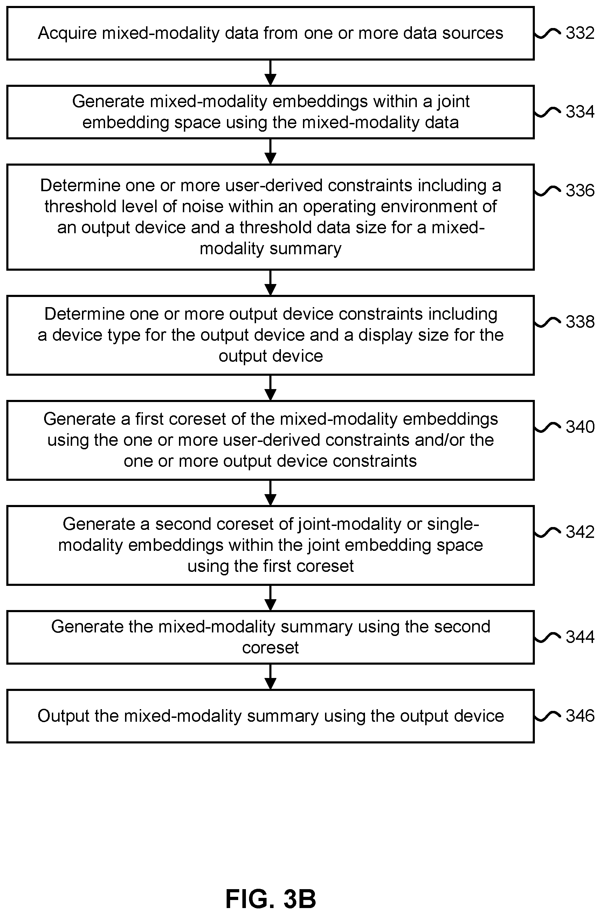

Figure 3B depicts a flowchart describing another embodiment of a process for generating a mixed-modality summary using a mixed-modality summary generation system. In one embodiment, the process of Figure 3B is performed using a computing system, such as the computing system 220 in Figure 2B, using the mixed-modality summary generation system 140 in Figure 1A, or using the mixed-modality summary generation system 141 in Figure 1B. In another embodiment, the process of Figure 3B is implemented using a cloud-based computing platform or cloud-based computing services.

In step 332, mixed-modality data is acquired from one or more data sources. The one or more data sources may comprise databases or data repositories that store data of different types of modalities. In one example, the mixed-modality data corresponds to the mixed-modality data 110 in Figure 1A. In step 334, mixed-modality embeddings within a joint embedding space are generated using the mixed-modality data. In step 336, one or more user-derived constraints are determined. The one or more user-derived constraints may include a threshold level of noise within an operating environment of an output device and a threshold data size for a mixed-modality summary. In step 338, one or more output device constraints are determined. The one or more output device constraints may include a device type for the output device and a display size for the output device.

In step 340, a first coreset of the mixed-modality embeddings is generated. The first coreset may comprise a representative subset of the mixed-modality embeddings. In some cases, the first coreset is generated using the one or more user-derived constraints and/or the one or more output device constraints. In step 342, a second coreset of joint-modality or single-modality embeddings within the joint embedding space is generated using the first coreset.

In one embodiment, the second coreset of joint-modality or single-modality embeddings is generated using the coreset remapping engine 170 in Figure 1B. The coreset remapping engine 170 remaps every embedding within the first coreset that is associated with modalities that are not permitted within the mixed-modality summary. A mixed-modality summary generation system may determine which modalities are permitted within the mixed-modality summary based on the one or more user-derived constraints and/or the one or more output device constraints. In step 344, a mixed-modality summary is generated using the second coreset. In step 346, the mixed-modality summary is output using the output device.

At least one embodiment of the disclosed technology includes a storage device for storing instructions that, when executed, cause a system to perform operations comprising acquiring mixed-modality data covering data from a first number of modalities; generating mixed-modality embeddings within a joint embedding space using the mixed-modality data; generating a coreset of the mixed-modality embeddings, the coreset comprises a representative subset of the mixed-modality embeddings; generating a second coreset of embedding vectors using the coreset of the mixed-modality embeddings, each embedding vector of the second coreset of embedding vectors has fewer modalities than the first number of modalities; generating the mixed-modality summary using the second coreset of embedding vectors; and outputting the mixed-modality summary.

At least one embodiment of the disclosed technology includes acquiring mixed-modality data covering data from a first number of modalities; generating mixed-modality embeddings within a joint embedding space using the mixed-modality data; generating a coreset of the mixed-modality embeddings, the coreset comprises a subset of the mixed-modality embeddings; generating a second coreset of embedding vectors by remapping at least one embedding vector from the coreset of the mixed-modality embeddings, each embedding vector of the second coreset of embedding vectors has fewer modalities than the first number of modalities; generating the mixed-modality summary using the second coreset of embedding vectors; and storing the mixed-modality summary.

At least one embodiment of the disclosed technology includes a storage device configured to store mixed-modality data covering data from a first number of modalities; and a processing system in communication with the storage device that is configured to: generate mixed-modality embeddings within a joint embedding space using the mixed-modality data; generate a coreset of the mixed-modality embeddings, the coreset comprises a subset of the mixed-modality embeddings; generate a second coreset of embedding vectors using the coreset of the mixed-modality embeddings, each embedding vector of the second coreset of embedding vectors has fewer modalities than the first number of modalities; generate the mixed-modality summary using the second coreset of embedding vectors; and transmit the mixed-modality summary.

In some embodiments, the generation of the second coreset of embedding vectors includes detection that a joint-modality embedding that has fewer modalities than the first number of modalities is within a threshold distance of a mixed-modality embedding within the coreset and replacing the mixed-modality embedding with the joint-modality embedding within the second coreset of embedding vectors.

The disclosed technology may be described in the context of computer-executable instructions being executed by a computer or processor. The computer-executable instructions may correspond with portions of computer program code, routines, programs, objects, software components, data structures, or other types of computer-related structures that may be used to perform processes using a computer. Computer program code used for implementing various operations or aspects of the disclosed technology may be developed using one or more programming languages, including an object oriented programming language such as Java or C++, a function programming language such as Lisp, a procedural programming language such as the "C" programming language or Visual Basic, or a dynamic programming language such as Python or JavaScript. In some cases, computer program code or machine-level instructions derived from the computer program code may execute entirely on an end user's computer, partly on an end user's computer, partly on an end user's computer and partly on a remote computer, or entirely on a remote computer or server.

The flowcharts and block diagrams in the figures provide illustrations of the architecture, functionality, and operation of possible implementations of systems, methods, and computer program products according to various aspects of the disclosed technology. In this regard, each step in a flowchart may correspond with a program module or portion of computer program code, which may comprise one or more computer-executable instructions for implementing the specified functionality. In some implementations, the functionality noted within a step may occur out of the order noted in the figures. For example, two steps shown in succession may, in fact, be executed substantially concurrently, or the steps may sometimes be executed in the reverse order, depending upon the functionality involved. In some implementations, steps may be omitted and other steps added without departing from the spirit and scope of the present subject matter. In some implementations, the functionality noted within a step may be implemented using hardware, software, or a combination of hardware and software. As examples, the hardware may include microcontrollers, microprocessors, field programmable gate arrays (FPGAs), and electronic circuitry.

For purposes of this document, the term "processor" may refer to a real hardware processor or a virtual processor, unless expressly stated otherwise. A virtual machine may include one or more virtual hardware devices, such as a virtual processor and a virtual memory in communication with the virtual processor.

For purposes of this document, it should be noted that the dimensions of the various features depicted in the figures may not necessarily be drawn to scale.

For purposes of this document, reference in the specification to "an embodiment," "one embodiment," "some embodiments," "another embodiment," and other variations thereof may be used to describe various features, functions, or structures that are included in at least one or more embodiments and do not necessarily refer to the same embodiment unless the context clearly dictates otherwise.

For purposes of this document, a connection may be a direct connection or an indirect connection (e.g., via another part). In some cases, when an element is referred to as being connected or coupled to another element, the element may be directly connected to the other element or indirectly connected to the other element via intervening elements. When an element is referred to as being directly connected to another element, then there are no intervening elements between the element and the other element.

For purposes of this document, the term "based on" may be read as "based at least in part on."

For purposes of this document, without additional context, use of numerical terms such as a "first" object, a "second" object, and a "third" object may not imply an ordering of objects, but may instead be used for identification purposes to identify or distinguish separate objects.

For purposes of this document, the term "set" of objects may refer to a "set" of one or more of the objects.

For purposes of this document, the phrases "a first object corresponds with a second object" and "a first object corresponds to a second object" may refer to the first object and the second object being equivalent, analogous, or related in character or function.

For purposes of this document, the term "or" should be interpreted in the conjunctive and the disjunctive. A list of items linked with the conjunction "or" should not be read as requiring mutual exclusivity among the items, but rather should be read as "and/or" unless expressly stated otherwise. The terms "at least one," "one or more," and "and/or," as used herein, are open-ended expressions that are both conjunctive and disjunctive in operation. The phrase "A and/or B" covers embodiments having element A alone, element B alone, or elements A and B taken together. The phrase "at least one of A, B, and C" covers embodiments having element A alone, element B alone, element C alone, elements A and B together, elements A and C together, elements B and C together, or elements A, B, and C together. The indefinite articles "a" and "an," as used herein, should typically be interpreted to mean "at least one" or "one or more," unless expressly stated otherwise.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

Methods and apparatuses for generating mixed-modality summaries of mixed-modality data subject to constraints that vary over time, end users, output device types, and operating environments are described. A mixed-modality summary generation system generates mixed-modality embeddings within a joint embedding space using the mixed-modality data, determines user-derived constraints and output device constraints, determines a coreset of the mixed-modality embeddings within the joint embedding space based on the user-derived constraints and output device constraints, generates a mixed-modality summary using the coreset, and outputs the mixed-modality summary using an output device. Based on the user-derived constraints and the output device constraints, the mixed-modality summary generation system may identify joint-modality or single-modality embeddings, wherein each embedding comprises a joint-modality or single-modality embedding within a threshold distance to one of the embeddings within the coreset of the mixed-modality embeddings.

In an aspect, a system for generating a mixed-modality summary, comprises: a storage device for storing instructions that, when executed, cause the system to perform operations comprising: acquiring mixed-modality data covering data from a first number of modalities; generating mixed-modality embeddings within a joint embedding space using the mixed-modality data; generating a coreset of the mixed-modality embeddings, the coreset comprises a representative subset of the mixed-modality embeddings; generating a second coreset of embedding vectors using the coreset of the mixed-modality embeddings, each embedding vector of the second coreset of embedding vectors has fewer modalities than the first number of modalities; generating the mixed-modality summary using the second coreset of embedding vectors; and outputting the mixed-modality summary.

In an example, each embedding vector within the second coreset comprises a nearest neighbor joint-modality embedding vector to one of the embedding vectors within the coreset of the mixed-modality embeddings.

In an example, the generating the second coreset of embedding vectors includes detecting that a joint-modality embedding that has fewer modalities than the first number of modalities is within a threshold distance of a mixed-modality embedding within the coreset and replacing the mixed-modality embedding with the joint-modality embedding within the second coreset of embedding vectors.

In an example, the system further comprises generating joint-modality embeddings within the joint embedding space, each embedding of the joint-modality embeddings has fewer modalities than the first number of modalities; and replacing at least one of the mixed-modality embeddings within the coreset with one of the joint-modality embeddings within the joint embedding space.

In an example, the system further comprises determining a user-derived constraint, the generating the second coreset of embedding vectors includes generating the second coreset of embedding vectors based on the user-derived constraint.

In an example, the user-derived constraint comprises a restriction on a data size for the mixed-modality summary.

In an example, the system further comprises determining an output device constraint for an output device for outputting the mixed-modality summary, the generating the second coreset of embedding vectors includes generating the second coreset of embedding vectors using the output device constraint.

In an example, the output device constraint comprises a type of output device used for outputting the mixed-modality summary; and the outputting the mixed-modality summary comprises outputting the mixed-modality summary using the output device.

In an example, the mixed-modality data includes text data, image data, audio data, and video data; and the outputting the mixed-modality summary includes displaying the mixed-modality summary using the output device.

In an example, the system further comprises detecting that an amount of noise within an operating environment of the output device is greater than a threshold level of noise and preventing an audio component from being a part of the mixed-modality summary in response to detecting that the amount of noise within the operating environment of the output device is greater than the threshold level of noise.

In an example, the system further comprises: detecting that a display size for the output device is less than a threshold display size and preventing a video component from being a part of the mixed-modality summary in response to detecting that the display size for the output device is less than the threshold display size.

In an example, the output device comprises one of a watch, a head-mounted display device, a smartphone, or a laptop computer; and the mixed-modality summary includes an audio component and a video component.

In an aspect, a method for generating a mixed-modality summary, comprises: acquiring mixed-modality data covering data from a first number of modalities; generating mixed-modality embeddings within a joint embedding space using the mixed-modality data; generating a coreset of the mixed-modality embeddings, the coreset comprises a subset of the mixed-modality embeddings; generating a second coreset of embedding vectors by remapping at least one embedding vector from the coreset of the mixed-modality embeddings, each embedding vector of the second coreset of embedding vectors has fewer modalities than the first number of modalities; generating the mixed-modality summary using the second coreset of embedding vectors; and outputting the mixed-modality summary.

In an example, each embedding vector within the second coreset comprises a nearest neighbor joint-modality embedding vector to one of the embeddings within the coreset of the mixed-modality embeddings.

In an example, the generating the second coreset of embedding vectors includes detecting that a joint-modality embedding that has fewer modalities than the first number of modalities is within a threshold distance of a mixed-modality embedding within the coreset and replacing the mixed-modality embedding with the joint-modality embedding within the second coreset of embedding vectors.

In an example, the method further comprises generating joint-modality embeddings within the joint embedding space, each embedding of the joint-modality embeddings has fewer modalities than the first number of modalities; and replacing at least one of the mixed-modality embeddings within the coreset with one of the joint-modality embeddings within the joint embedding space.

In an example, the method further comprises: detecting that an amount of noise within an operating environment is greater than a threshold level of noise and preventing an audio component from being a part of the mixed-modality summary in response to detecting that the amount of noise within the operating environment is greater than the threshold level of noise.

In an example, the method further comprises: playing or displaying the mixed-modality summary using an output device, the mixed-modality data includes text data, image data, audio data, and video data, the mixed-modality summary includes the text data and the audio data.

In an aspect, a system comprises: a storage device configured to store mixed-modality data covering data from a first number of modalities; and a processing system in communication with the storage device that is configured to: generate mixed-modality embeddings within a joint embedding space using the mixed-modality data; generate a coreset of the mixed-modality embeddings, the coreset comprises a subset of the mixed-modality embeddings; generate a second coreset of embedding vectors using the coreset of the mixed-modality embeddings, each embedding vector of the second coreset of embedding vectors has fewer modalities than the first number of modalities; generate the mixed-modality summary using the second coreset of embedding vectors; and transmit the mixed-modality summary.

In an example, the generation of the second coreset of embedding vectors includes detection that a joint-modality embedding that has fewer modalities than the first number of modalities is within a threshold distance of a mixed-modality embedding within the coreset and replacing the mixed-modality embedding with the joint-modality embedding within the second coreset of embedding vectors.

## Claims

1. A system for generating a mixed-modality summary, comprising:
a storage device (271) for storing instructions that, when executed, cause the system to perform operations comprising:
acquiring mixed-modality data covering data from a first number of modalities;
generating mixed-modality embeddings within a joint embedding space using the mixed-modality data;
generating a coreset of the mixed-modality embeddings, the coreset comprises a representative subset of the mixed-modality embeddings;
generating a second coreset of embedding vectors using the coreset of the mixed-modality embeddings, each embedding vector of the second coreset of embedding vectors has fewer modalities than the first number of modalities;
generating the mixed-modality summary using the second coreset of embedding vectors; and
outputting the mixed-modality summary.

2. The system of claim 1, wherein:
each embedding vector within the second coreset comprises a nearest neighbor joint-modality embedding vector to one of the embedding vectors within the coreset of the mixed-modality embeddings.

3. The system of any of claims 1-2, wherein:
the generating the second coreset of embedding vectors includes detecting that a joint-modality embedding that has fewer modalities than the first number of modalities is within a threshold distance of a mixed-modality embedding within the coreset and replacing the mixed-modality embedding with the joint-modality embedding within the second coreset of embedding vectors.

4. The system of any of claims 1-3, further comprising:
generating joint-modality embeddings within the joint embedding space, each embedding of the joint-modality embeddings has fewer modalities than the first number of modalities; and
replacing at least one of the mixed-modality embeddings within the coreset with one of the joint-modality embeddings within the joint embedding space.

5. The system of any of claims 1-4, further comprising:
determining a user-derived constraint, the generating the second coreset of embedding vectors includes generating the second coreset of embedding vectors based on the user-derived constraint.

6. The system of claim 5, wherein:
the user-derived constraint comprises a restriction on a data size for the mixed-modality summary.

7. The system of any of claims 1-6, further comprising:
determining an output device constraint for an output device for outputting the mixed-modality summary, the generating the second coreset of embedding vectors includes generating the second coreset of embedding vectors using the output device constraint.

8. The system of claim 7, wherein:
the output device constraint comprises a type of output device used for outputting the mixed-modality summary; and
the outputting the mixed-modality summary comprises outputting the mixed-modality summary using the output device.

9. The system of claim 7 or 8, wherein:
the mixed-modality data includes text data, image data, audio data, and video data; and
the outputting the mixed-modality summary includes displaying the mixed-modality summary using the output device.

10. The system of any of claims 7-9, further comprising:
detecting that an amount of noise within an operating environment of the output device is greater than a threshold level of noise and preventing an audio component from being a part of the mixed-modality summary in response to detecting that the amount of noise within the operating environment of the output device is greater than the threshold level of noise.

11. The system of any of claims 7-10, further comprising:
detecting that a display size for the output device is less than a threshold display size and preventing a video component from being a part of the mixed-modality summary in response to detecting that the display size for the output device is less than the threshold display size.

12. The system of any of claims 7-11, wherein:
the output device comprises one of a watch, a head-mounted display device, a smartphone, or a laptop computer; and
the mixed-modality summary includes an audio component and a video component.

13. A method for generating a mixed-modality summary, comprising:
acquiring (302) mixed-modality data covering data from a first number of modalities;
generating (304) mixed-modality embeddings within a joint embedding space using the mixed-modality data;
generating (310) a coreset of the mixed-modality embeddings, the coreset comprises a subset of the mixed-modality embeddings;
generating (314) a second coreset of embedding vectors by remapping at least one embedding vector from the coreset of the mixed-modality embeddings, each embedding vector of the second coreset of embedding vectors has fewer modalities than the first number of modalities;
generating (316) the mixed-modality summary using the second coreset of embedding vectors; and
outputting (318) the mixed-modality summary.

14. The method of claim 13, further comprising:
each embedding vector within the second coreset comprises a nearest neighbor joint-modality embedding vector to one of the embeddings within the coreset of the mixed-modality embeddings.

15. The method of any of claims 13-14, wherein:
the generating the second coreset of embedding vectors includes detecting that a joint-modality embedding that has fewer modalities than the first number of modalities is within a threshold distance of a mixed-modality embedding within the coreset and replacing the mixed-modality embedding with the joint-modality embedding within the second coreset of embedding vectors.
